**Europäisches Patentamt**

**European Patent Office**

**Office européen des brevets**

(19)

(11) Veröffentlichungsnummer: **0 033 362**
**A2**

## (12) EUROPÄISCHE PATENTANMELDUNG

(21) Anmeldenummer: **80106959.2**

(22) Anmeldetag: **12.11.80**

(51) Int. Cl.³: **F 16 F 1/38**

(30) Priorität: **05.02.80 DE 3004075**

(43) Veröffentlichungstag der Anmeldung:
**12.08.81 Patentblatt 81/32**

(84) Benannte Vertragsstaaten:
**BE FR GB IT NL SE**

(71) Anmelder: **Boge GmbH**
**Bogestrasse 50**
**D-5208 Eitorf/Sieg(DE)**

(72) Erfinder: **Hüsch, Bruno**
**Himmelsburger Strasse 139**
**D-5483 Bad Neuenahr-Ahrweiler(DE)**

(54) Elastisches Gelenk, Kupplung oder dergleichen.

(57) Ein elastisches Gelenk, Kupplung oder dergleichen, mit einem metallischen Innenteil (1, 1'), wie einer Gelenkkugel oder einer zylindrischen Büchse, einem mit diesem festhaftend verbundenen gummielastischen Körper (2,2'), welcher von einem im wesentlichen zylindrischen metallischen Außenteil (3, 3'), wie einer zylindrischen Büchse oder einem Gelenkauge, umgeben und mit diesem durch axiales Zusammenspannen zweier an den Stirnflächen des gummielastischen Körpers (2, 2') anliegender ringförmiger metallischer Teile (4, 4') lediglich durch Reibungshaftung verbunden ist, wobei an der äußeren Umfangsfläche des gummielastischen Körpers (2, 2') konstruktive Maßnahmen zur Erhöhung der Reibungshaftung vorgesehen sind.

Zur Schaffung eines einfachen und wirksamen elastischen Gelenks, Kupplung oder dergleichen der vorerwähnten Art, welches die Nachteile des bekannten elastischen Gelenks vermeidet und welches bei einfacher und billiger Herstellbarkeit in Massenfertigung insbesondere ein verbesserte Reibungschaftung zwischen gummielastischem Körper und Außenteil und somit einen vergrößerten maximalen Verdrehwinkel und eine verbesserte Dauerhaltbarkeit besitzt, ist in der äußeren Umfangsfläche des gummielastischen Körpers (2, 2') ein Gewebe (5, 5') aus einem festen Werkstoff, vorzugsweise Metalldraht, mit zur Zylinderachse (Z, Z') im wesentlichen diagonal verlaufenden Maschen eingebettet und das Gewebe (5, 5') gemeinsam mit dem gummielastischen Körper (2, 2') axial zusammenspannbar.

FIG.3

- 1 -

Elastisches Gelenk, Kupplung oder dergleichen

Die Erfindung bezieht sich auf ein elastisches Gelenk, Kupplung oder dergleichen, mit einem metallischen Innenteil, wie einer Gelenkkugel oder einer zylindrischen Büchse, einem mit diesem festhaftend verbundenen gummielastischen Körper, welcher von einem im wesentlichen zylindrischen metallischen Außenteil, wie einer zylindrischen Büchse oder einem Gelenkauge, umgeben und mit diesem durch axiales Zusammenspannen zweier an den Stirnflächen des gummielastischen Körpers anliegender ringförmiger metallischer Teile lediglich durch Reibungshaftung verbunden ist, wobei an der äußeren Umfangsfläche des gummielastischen Körpers konstruktive Maßnahmen zur Erhöhung der Reibungshaftung vorgesehen sind.

Ein elastisches Gelenk der vorstehend beschriebenen Gattung ist aus dem DE-GM 6 606 532 bekannt. Derartige elastische Gelenke, bei welchen der einen Gummi-Metall-Teil bildende Innenteil nebst Gummikörper in den Außenteil eingeschoben und durch das beschriebene axiale Verspannen in diesem festgehalten wird, eignet sich grundsätzlich gut für eine Massenfertigung. Dabei ist nämlich vor allem das axiale Verspannen des Gummikörpers beispielsweise im Vergleich zu einem ebenfalls bekannten allseitigen radialen Verspannen des Außenteils relativ einfach zu bewerkstelligen.

Bei dem bekannten elastischen Gelenk sind die an der äußeren Umfangsfläche des gummielastischen Körpers vorgesehenen konstruktiven Maßnahmen zur Erhöhung der Reibungshaftung dadurch gebildet, daß an dieser Umfangsfläche in Axial- oder Umfangsrichtung verlaufende Riefen gebildet, deren Tiefe bis zu ein Drittel der Gummistärke beträgt. Hierdurch soll sich gemäß den Angaben in der Gebrauchsmusterschrift der Gummi beim Zusammendrücken auch senkrecht zu den Riefen tangential verschieben, wodurch eine bei zweckmäßiger Riefenausbildung günstigere, gleichmäßige Druckspannungsverteilung und damit eine Verbesserung der Reibungshaftung zwischen Gummikörper und Außenteil erzielt werden soll.

Es hat sich jedoch gezeigt, daß diese konstruktiven Maßnahmen bei dem bekannten elastischen Gelenk immer noch nicht zu einer ausreichenden Erhöhung der Reibungshaftung führten. Insbesondere ergibt sich auch bei besonders starker axialer Verspannung der ringförmigen Teile nur eine Reibungshaftung, die einen unzureichenden Verdrehwinkel des elastischen Gelenks ermöglicht. Bei Überschreiten des maximal zulässigen Verdrehwinkels gleitet der Gummikörper unter starkem Verschleiß in dem Außenteil. Hierdurch hat das bekannte elastische Gelenk eine gemessen an den heutigen Anforderungen nicht ausreichende Dauerhaltbarkeit, Funktionssicherheit und Lebensdauer. Hierbei ist ferner auch noch zu berücksichtigen, daß infolge der sich relativ tief in den Gummikörper hinein erstreckenden sogenannten Riefen beim bekannten elastischen Gelenk nachteilige Kerbspannungsspitzen entstehen.

Der vorliegenden Erfindung liegt die Aufgabe zugrunde, ein einfaches und wirksames elastisches Gelenk, Kupplung oder dergleichen zu schaffen, welches die Nachteile des bekannten elastischen Gelenks vermeidet und welches bei einfacher und billiger Herstellbarkeit in Massenfertigung insbesondere eine verbesserte Rei-

0033362

bungshaftung zwischen gummielastischem Körper und Außenteil und somit einen vergrößerten maximalen Verdrehwinkel und eine verbesserte Dauerhaltbarkeit besitzt.

Diese Aufgabe wird bei einem elastischen Gelenk von der eingangs erwähnten Gattung erfindungsgemäß dadurch gelöst, daß in der äußeren Umfangsfläche des gummielastischen Körpers ein Gewebe aus einem festen Werkstoff, vorzugsweise Metalldraht, mit zur Zylinderachse im wesentlichen diagonal verlaufenden Maschen eingebettet ist, wobei das Gewebe gemeinsam mit dem gummielastischen Körper axial zusammenspannbar ist. Gemäß einer ganz besonders vorteilhaften Ausbildung der Erfindung erstreckt sich das Gewebe über die gesamte Umfangsfläche des gummielastischen Körpers. Dabei wird im Zusammenhang mit der vorliegenden Erfindung unter "Gewebe" auch ein Gitter verstanden.

Die Erfindung löst die gestellte Aufgabe in optimaler Weise mit besonders einfachen Mitteln. Ein Gewebe mit zur axialen Vorspannrichtung im wesentlichen diagonal verlaufenden Maschen von der erfindungsgemäß verwendeten Art ist (im Gegensatz zu einem Axial-Radial-Gewebe) bei einem axialen Verspannen der ringförmigen Teile unter Durchmesserweiterung der Gewebebuchse nachgiebig, wobei sich das Gewebe besonders gleichmäßig im Außenteil verschiebt. Im Ergebnis entsteht damit eine über den gesamten Umfang gleichmäßige besonders gute Reibungshaftung zwischen Grundkörper und Außenteil, welche einen entsprechend großen maximal zulässigen Verdrehwinkel des elastischen Gelenks ermöglicht. Im Vergleich zu dem aus dem DE-GM 6 605 532 bekannten elastischen Gelenk ergibt sich ein vorgegebener maximaler Verdrehwinkel bei der Erfindung aufgrund einer wesentlich geringeren axialen Verspannung, bzw. bei vorgegebener axialer Verspannung ist der maximale Verdrehwinkel beim erfindungsgemäßen elastischen Gelenk merklich größer als bei dem bekannten. Beim Oberschreiten des maximal zulässigen Verdrehwinkels ergibt sich ein praktisch verschleißfreies Gleiten zwischen der mit dem Gewebe versehenen Umfangsfläche des gummielastischen Körpers und dem Außenteil. Somit hat das elastische Gelenk nach der Erfindung eine besonders gute Dauerhaltbarkeit, Funktionssicherheit und Lebensdauer. Die Anbringung des Gewebes an der Oberfläche des gummielastischen Körpers ist einfach und billig auch in Massenfertigung realisierbar. Da das Gewebe gleichmäßig in der Oberfläche des gummielastischen Körpers eingebettet ist, entstehen im übrigen praktisch keine Kerbspannungen in diesem.

Aus einer weiteren Vorveröffentlichung, der DE-PS 2 520 947, ist es zwar grundsätzlich bekannt, bei einem elastischen Gelenk, welches im wesentlichen einen Aufbau von der zur Rede stehenden Gattung besitzt, im Gummi in Axialrichtung verlaufende metallische Ringeinlagen anzubringen, welche zur Vermeidung einer plastischen Verformung beim axialen Verspannen des Gummis nicht über dessen gesamte axiale Erstreckung verlaufen und axial und radial gegeneinander versetzt sind. Durch diese bekannte Konstruktion, welche keinesfalls die Vorteile der vorliegenden Erfindung erbringt, soll im übrigen außer zwischen dem Gummikörper und dem Außenteil auch zwischen dem Gummikörper und dem Innenteil eine Reibungshaftung erzielt werden. Zum anderen ist dieses bekannte elastische Gelenk konstruktiv besonders aufwendig und damit für eine Massenfertigung schlecht brauchbar, zumal die metallischen Ringeinlagen auch noch besonders gegen axiales Herausziehen gesichert werden müssen.

Somit konnte diese Literaturstelle nichts zur vorliegenden Erfindung beitragen.

Gleiches gilt auch für das weitere aus der DE-PS 1 955 3o8 bekannte elastische Gelenk. Aus dieser Literaturstelle ist es zwar grundsätzlich bekannt, am äußeren Umfang des gummielastischen Körpers eine elastisch oder plastisch verformbare dünne Blechhülse mit gleichmäßig verteilten Löchern vorzusehen, wonach ein Außenteil um die Blechhülse angebracht wird. Dieses bekannte elastische Gelenk unterscheidet sich jedoch grundsätzlich vom Oberbegriff des erfindungsgemäßen Gelenks, zumal das bekannte Gelenk nicht durch axiales Verspannen des Gummikörpers, sondern durch ein allseitiges radiales Zusammendrücken in den Fertigzustand gebracht wird. Hierzu sind im Gummi V-förmige Aussparungen mit auf den Innenteil gerichteter Spitze vorgesehen, welche im übrigen starke Kerbspannungen ergeben. Außerdem ist, wie bereits einleitend angedeutet, ein derartiges radial zusammenzudrückendes elastisches Gelenk grundsätzlich aufwendiger in der Herstellung und somit schlechter für eine Massenfertigung geeignet. Ein weiteres Unterschiedsmerkmal zur Erfindung liegt auch darin, daß bei diesem bekannten Gelenk zusätzliche gelochte Blechzwischenhülsen im Gummi eingelagert sind.

Vorteilhafterweise beträgt bei einem erfindungsgemäßen elastischen Gelenk mit einem Metalldrahtgewebe die Weite der Maschen mindestens 1 mm.
Dabei beträgt die Drahtdicke mit Vorteil mindestens 0,2 mm, vorzugsweise 0,5 mm.

Eine besonders zweckmäßige Konstruktion ergibt sich, wenn gemäß einem weiteren Erfindungsmerkmal die an den Stirnflächen des gummielastischen Körpers anliegenden zusammenspannbaren ringförmigen Teile im Bereich der benachbarten Stirnseiten des Gewebes angeordnet sind. Damit ist sichergestellt, daß das Gewebe zusammen mit dem gummielastischen Körper gleichmäßig axial zusammengedrückt wird.

Die Erfindung wird nachstehend anhand von in der Zeichnung schematisch dargestellten Ausführungsbeispielen näher erläutert. Es zeigen:

Figur 1 im Axialschnitt ein elastisches Drehgelenk oder eine Kupplung mit fortgelassenem Außenteil vor dem axialen Verspannen des gummielastischen Körpers nebst des in dessen Umfangsfläche eingebetteten Metalldrahtgewebes,

Figur 2 das elastische Drehgelenk nach Figur 1, jedoch mit montiertem Außenteil und nach dem axialen Verspannen des gummielastischen Körpers in diesem, und

Figur 3 im Axialschnitt ein elastisches Kugelgelenk nach der Erfindung, wobei die Darstellung der oberen Gelenkhälfte dem Zustand nach Figur 1 und die Darstellung der unteren Gelenkhälfte dem Zustand nach Figur 2 grundsätzlich entspricht.

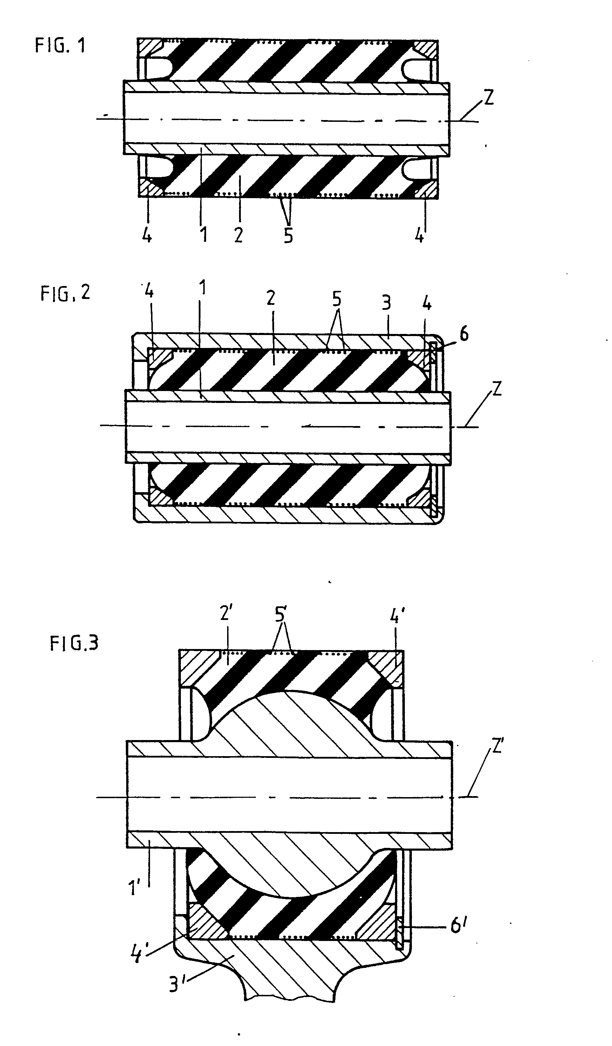

Das elastische Drehgelenk nach den Figuren 1 und 2 weist einen als zylindrische Büchse ausgebildeten metallischen Innenteil 1 auf, mit welchem durch Vulkanisation ein gummielastischer Körper 2 festhaftend verbunden ist.

Der gummielastische Körper 2 ist von einem zylinderbüchsenförmigen metallischen Außenteil umgeben und
mit diesem durch axiales Zusammenspannen zweier an
den Stirnflächen des gummielastischen Körpers 2 anliegender ringförmiger metallischer Teile 4 lediglich
durch Reibungshaftung verbunden.

Erfindungsgemäß ist zur merklichen Verbesserung der
Reibungshaftung und Erhöhung der Dauerhaltbarkeit
in der äußeren Umfangsfläche des gummielastischen
Körpers 2 vorzugsweise ein Metalldrahtgewebe 5 mit
zur Zylinderachse Z im wesentlichen diagonal verlaufenden Maschen eingebettet, wobei das Metalldrahtgewebe 5 gemeinsam mit dem gummielastischen Körper 2
axial zusammenspannbar ist.

Zur Optimierung der Vorteile der Erfindung erstreckt
sich das Metalldrahtgewebe 5 über die gesamte Umfangsfläche des gummielastischen Körpers 2.

Bei einem mit besonderem Erfolg in der Praxis erprobten Ausführungsbeispiel betrug die Maschenweite
2 mm bei einer Drahtdicke von 0,5 mm. Es sind jedoch
grundsätzlich auch andere Werte für die Maschenweite
(beispielsweise 1 bis 5 mm) und die Drahtdicke (beispielsweise 0,2 bis 1 mm) möglich.

Zweckmäßigerweise sind die an den Stirnflächen des
gummielastischen Körpers 2 anliegenden zusammenspannbaren ringförmigen Teile 4 im Bereich der benachbarten Stirnseiten des Metalldrahtgewebes 5 angeordnet.
Insbesondere fluchtet der Außendurchmesser der ringförmigen Teile 4 mit dem Außendurchmesser des gummielastischen Körpers 2. Im übrigen sind die ringförmigen Teile 4 durch Vulkanisation mit dem gummi-

./8

- 8 -

elastischen Körper verbunden.

Zur Sicherung gegen ein Wiederherausrutschen des axial zusammengespannten gummielastischen Körpers 2 nebst ringförmigen Teilen 4 ist im Außenteil 3 ein Springring 6 angeordnet.

Das Ausführungsbeispiel nach Figur 3 unterscheidet sich von der in Figur 1 und 2 dargestellten Ausführung lediglich dadurch, daß die Erfindung hier bei einem elastischen Kugelgelenk realisiert ist. Demnach ist der Innenteil 1' als Kugelzapfen ausgebildet, während der Außenteil 3' die Form eines Gelenkauges hat. Im übrigen entsprechen bezüglich der vorliegenden Erfindung Aufbau und Funktionsweise dieses elastischen Kugelgelenks der Ausführung nach den Figuren 1 und 2.

Patentansprüche

1. Elastisches Gelenk, Kupplung oder dergleichen, mit einem metallischen Innteil, wie einer Gelenkkugel oder einer zylindrischen Büchse, einem mit diesem festhaftend verbundenen gummielastischen Körper, welcher von einem im wesentlichen zylindrischen metallischen Außenteil, wie einer zylindrischen Büchse oder einem Gelenkauge, umgeben und mit diesem durch axiales Zusammenspannen zweier an den Stirnflächen des gummielastischen Körpers anliegender ringförmiger metallischer Teile lediglich durch Reibungshaftung verbunden ist, wobei an der äußeren Umfangsfläche des gummielastischen Körpers konstruktive Maßnahmen zur Erhöhung der Reibungshaftung vorgesehen sind,
dadurch gekennzeichnet,
daß in der äußeren Umfangsfläche des gummielastischen Körpers (2, 2') ein Gewebe (5, 5') aus einem festen Werkstoff, vorzugsweise Metalldraht, mit zur Zylinderachse (Z, Z') im wesentlichen diagonal verlaufenden Maschen eingebettet ist, wobei das Gewebe (5, 5') gemeinsam mit dem gummielastischen Körper (2, 2') axial zusammenspannbar ist.

2. Elastisches Gelenk, Kupplung oder dergleichen nach Anspruch 1,
dadurch gekennzeichnet,
daß sich das Gewebe (5, 5') über die gesamte Umfangsfläche des gummielastischen Körpers (2, 2') erstreckt.

3. Elastisches Gelenk, Kupplung oder dergleichen
nach Anspruch 1 oder 2, mit einem Metalldrahtgewebe,
dadurch gekennzeichnet,
daß die Weite der Maschen mindestens 1 mm beträgt.

4. Elastisches Gelenk, Kupplung oder dergleichen
nach Anspruch 3,
dadurch gekennzeichnet,
daß die Drahtdicke o,2 bis 1 mm, vorzugsweise
o,5 mm, beträgt.

5. Elastisches Gelenk, Kupplung oder dergleichen nach
einem der Ansprüche 1 bis 4,
dadurch gekennzeichnet,
daß die an den Stirnflächen des gummielastischen
Körpers (2, 2') anliegenden zusammenspannbaren
ringförmigen Teile (4, 4') im Bereich der benachbarten Stirnseiten des Gewebes (5, 5') angeordnet sind.

FIG. 1

FIG. 2

FIG. 3